# DEMANDE DE BREVET EUROPEEN

(11) **EP 4 299 423 A1**
(43) Date de publication de la demande: **03.01.2024**
(21) Numéro de dépôt: 23180341.2
(22) Date de dépôt: 20.06.2023
(51) Int. Cl.: B62H 5/02, B62J 6/00, B62J 43/13, B62J 50/22, B62K 3/00, B62K 15/00

(54) **TROTTINETTE COMPRENANT UN BLOC DIRECTIONNEL PLIABLE AVEC STRUCTURE TUBULAIRE À DOUBLE-POTENCE**

(30) Priorité: 28.06.2022 FR 2206463
(71) Demandeur: Plume, 59350 Saint-André-lez-Lille (FR)
(72) Inventeur: Mahieu, François, 59830 Cysoing (FR)
(74) Mandataire: RVDB

(57) **Abrégé**

L'invention concerne une trottinette (100) comportant une plateforme (10), un bloc directionnel (20), une roue avant (30a) et une roue arrière (30b) dans laquelle ledit bloc directionnel (20) comprend des moyens de pliage (40) autorisant un passage d'une première configuration (C1) dite d'utilisation vers une deuxième configuration (C2) dite de transport, ledit bloc (20) présente un système de double-potence formant un U comprenant deux branches (23) dont les extrémités (23a) réceptionnent l'axe (31a) de la roue avant (30a), la trottinette (100) comprenant une manette d'activation (60) reliant les moyens de pliage (40) de chacune des branches (23) du U et dont l'actionnement dans une position de pliage (P1) permet d'activer le pliage simultané desdites branches (23).

## Description

### Domaine technique

La présente invention concerne le domaine de la mobilité urbaine, et plus particulièrement le domaine des véhicules terrestres de type trottinette ou trottinette électrique.

L'objet de la présente invention porte ainsi sur une trottinette pliable facile à déplacer en configuration pliée.

Par « trottinette » au sens de la présente invention, il faut comprendre dans toute la description qui suit un véhicule terrestre léger comprenant une plateforme sur laquelle est monté un bloc directionnel équipé d'un guidon, ladite plateforme étant portée par au moins deux roues dont une roue arrière et une roue avant reliée directement ou indirectement au bloc directionnel.

### Art antérieur

On observe ces dernières années une évolution dans les modes de vies en milieu urbain. L'automobile y prend progressivement une place moins centrale et se voit remplacer progressivement par des solutions à échelle individuelle adaptées à des trajets plus courts. Divers types de véhicules terrestres légers dérivés des vélos à assistance électrique, ou véhicules électriques légers, se sont développés et proposent l'emploi de véhicules électriques légers pour le particulier ou encore sous forme de flotte à destination d'une municipalité ou d'une entreprise.

Parmi ces solutions, la trottinette électrique présente une pluralité d'avantages dont une simplicité de prise en main et une conception très légère. Celles-ci permettent en outre d'allonger les distances parcourues en limitant les efforts de l'utilisateur.

La trottinette est un moyen de transport facile d'utilisation qui se présente comme une alternative intéressante aux bicyclettes, l'utilisation de la trottinette évitant les différents problèmes liés notamment à la circulation, au stationnement ou encore à la pollution.

Les trottinettes présentent par rapport aux bicyclettes des avantages significatifs en termes de mobilité : elles sont par nature moins encombrantes et plus légères que celles-ci.

La trottinette est un moyen de transport complémentaire qui permet principalement de parcourir une petite distance ou de finir un trajet pour atteindre une destination finale.

On parle aussi de la problématique du « dernier kilomètre ».

Ainsi, une personne qui sort du bus, du métro ou du train doit le plus souvent parcourir une distance supplémentaire avant d'arriver à sa destination finale (lieu de travail ou autres). Cette dernière distance à parcourir peut représenter plusieurs minutes de marche à pied. Dans cette situation, l'utilisation de la trottinette constitue un parfait candidat.

C'est donc naturellement que les citadins ont aujourd'hui très largement adopté dans leurs déplacements urbains l'utilisation de la trottinette électrique.

Le Demandeur soumet en revanche que les trottinettes électriques pliables connues jusqu'à présent ne sont pas maniables lorsqu'elles sont pliées et que les moyens de pliage mis en oeuvre jusqu'à présent n'offrent pas une bonne sécurité.

### Résumé de l'invention

L'objet de la présente invention est d'améliorer la situation décrite ci-dessus.

La présente invention vise donc à remédier aux différents inconvénients mentionnés ci-dessus en proposant la conception d'une trottinette électrique pliable facile à transporter.

L'objet de la présente invention concerne plus particulièrement une trottinette qui comporte classiquement :
- une plateforme (ou « deck ») destinée à recevoir un utilisateur en position debout ;
- un bloc directionnel longiligne monté en liaison directement ou indirectement avec ladite plateforme ; et
- au moins deux roues dont une roue avant fixée sur une extrémité proximale du bloc directionnel et une roue arrière fixée sur une extrémité distale de la plateforme.

Selon la présente invention, le bloc directionnel comprend des moyens de pliage mettant en oeuvre une première liaison pivot, agencée entre une portion distale et une portion proximale dudit bloc, dont l'activation autorise un pivotement de la portion distale du bloc par rapport à la portion proximale du bloc autour d'un premier axe de pivotement perpendiculaire à l'axe longitudinal du bloc et s'étendant dans un plan transversal à ladite plateforme, pour un passage d'une première configuration dite d'utilisation vers une deuxième configuration dite de transport.

Selon l'invention, les moyens de pliage en configuration d'utilisation sont désactivés de manière à ce que le bloc directionnel et la plateforme sont en équerre l'un par rapport à l'autre. Ils forment un angle sensiblement droit ; par angle sensiblement droit au sens de la présente invention, on comprend ici que l'angle formé par le bloc et la plateforme est compris entre 75 et 105°.

Dans cette configuration d'utilisation, les portions distale et proximale du bloc directionnel s'étendent dans le même axe longitudinal du bloc et forment un ensemble monobloc sensiblement perpendiculaire à la plateforme, ce qui permet à l'utilisateur de se tenir debout sur la plateforme et de saisir le guidon pour se déplacer en trottinette.

Selon l'invention, les moyens de pliage en configuration de transport sont activés de manière à ce que la portion distale du bloc pivote autour du premier axe de pivotement pour se rabattre en direction de ladite plateforme, de préférence contre celle-ci, afin de réduire l'encombrement de la trottinette.

De préférence, en configuration de transport, la plateforme et la portion distale du bloc directionnel sont sensiblement parallèle entre eux.

Avantageusement, le bloc directionnel présente une structure tubulaire avec un système de double-potence en forme de U. on parle également de fourche.

Préférentiellement, le U comprend deux branches et de préférence une base. Préférentiellement, les extrémités des deux branches du U réceptionnant l'axe de la roue avant.

Préférentiellement, la base du U comprenant une empreinte pour la réception d'un guidon. Dans un mode de réalisation avantageux, les moyens de pliage sont configurés pour assurer le pliage respectif de chacune des branches du U.

Ainsi, cette structure avec un châssis tubulaire et une double fourche offre une grande robustesse à la trottinette.

Avantageusement, on peut prévoir dans ce mode que la trottinette comprend une manette d'activation reliant les moyens de pliage de chacune des branches du U et étant configurée pour que l'actionnement de celle-ci dans une position de pliage permet d'activer le pliage simultané des branches.

Outre le fait d'améliorer la robustesse de la trottinette, cette conception tubulaire avec une double potence dont les branches sont reliées par une manette d'activation destinée à activer l'actionnement simultané des moyens de pliage au niveau de chacune des branches permet de renforcer la sécurité en évitant un pliage accidentel du bloc directionnel.

Ceci permet une redondance du système de pliage qui, en cas de défaillance d'un des moyens de pliage sur une branche, permet toujours de bénéficier d'un verrouillage fonctionnel.

En effet, la plupart des trottinettes présente un bloc directionnel se présente sous la forme d'un unique tube. Avec une telle conception mono-tubulaire, les risques de pliage accidentel sont présents.

Par ailleurs la conception monotube directionnelle présente des cas de casse fréquents qui occasionnent des risques de chute.

Le demandeur soumet par ailleurs que, sur les conceptions de trottinettes à double-potence, le bloc directionnel n'est pas pliable et il n'existe pas de manette d'activation configurée pour activer le pliage simultané des deux branches.

Avantageusement, la trottinette selon la présente invention comporte un bouclier frontal solidaire du bloc directionnel et présentant :
- un premier bord distal de forme incurvée vers l'avant définissant une face externe, apte à recevoir des moyens d'affichage, orientée en direction de l'utilisateur de la trottinette en configuration d'utilisation ; et
- un deuxième bord proximal de forme incurvée vers l'avant présentant une portion d'arceau définissant, lorsque la trottinette est en configuration de transport, une poignée de préhension à portée de main dudit utilisateur pour en faciliter la traction lors d'un déplacement pédestre. Grâce à la présence de cette poignée de préhension formée par la portion d'arceau du bouclier frontal, il est possible pour l'utilisateur de saisir facilement la trottinette en configuration de transport et de tracter celle-ci pour la déplacer à l'état plié.

Avantageusement, la trottinette est de type électrique et comprend une batterie intégrée à la plateforme (sous ou dans celle-ci), ladite batterie étant raccordée électriquement aux moyens d'affichage par un câble d'alimentation et une connectique apte à se connecter aux moyens d'affichage.

Avantageusement, le bouclier frontal comprend en face frontale un dispositif d'éclairage et de signalisation raccordé électriquement à la batterie.

Ce dispositif d'éclairage et de signalisation peut par exemple comprendre un bandeau lumineux qui s'étend au moins partiellement le long du pourtour périphérique du bouclier formant ainsi une véritable signature lumineuse de la trottinette.

Avantageusement, le dispositif d'éclairage et de signalisation est apte à être commandé électroniquement via une interface de commande des moyens d'affichage. Préférentiellement, la manette d'activation est configurée pour actionner une came apte à déverrouiller le pliage lorsque la manette d'activation atteint la position de pliage. Préférentiellement, la trottinette selon la présente invention comprend des moyens de verrouillage/déverrouillage configurés pour verrouiller/déverrouiller l'actionnement de la manette de pliage.

Dans un mode de réalisation avantageux, les moyens de verrouillage/déverrouillage comprennent pour chaque branche du U une bague de sécurité comprenant une encoche de blocage.

Dans ce mode, la bague de sécurité est apte à tourner sur elle-même autour de la branche de manière à autoriser le passage d'une position verrouillée à une position déverrouillée, ou inversement.

Préférentiellement, l'encoche en position verrouillée est engagée dans une portion de la manette d'activation pour bloquer l'actionnement de celle-ci et maintenir en position la came. Préférentiellement, l'encoche en position déverrouillée est désengagée de la manette d'activation pour libérer l'actionnement de celle-ci et autoriser l'actionnement de la came. Dans un mode de réalisation avantageux, la poignée de préhension s'étend dans le prolongement de la plateforme.

Dans un mode de réalisation avantageux, le bouclier frontal présente une forme elliptique incurvée.

Avantageusement, le bloc directionnel est articulé directement ou indirectement avec la plateforme selon une deuxième liaison pivot autorisant un pivotement du bloc directionnel par rapport à la plateforme autour d'un deuxième axe de pivotement longitudinal du bloc. Avantageusement, la trottinette selon la présente invention comprend un guidon fixé sur l'extrémité distale du bloc directionnel dont l'actionnement entraîne le pivotement du bloc directionnel par rapport à la plateforme autour du deuxième axe de pivotement afin d'orienter la roue avant dans un sens de déplacement souhaité de la trottinette.

Ainsi, la présente invention, par ses différentes caractéristiques techniques structurelles et fonctionnelles décrites ci-dessus, met à disposition des utilisateurs une trottinette dont la conception nouvelle garantit un encombrement réduit et une manipulation aisée (en traction) en configuration de transport et dont les manipulations pour le passage de cette configuration de transport à la configuration d'utilisation se font simplement et de façon semi-automatique à l'aide d'une simple manette.

### Description des figures

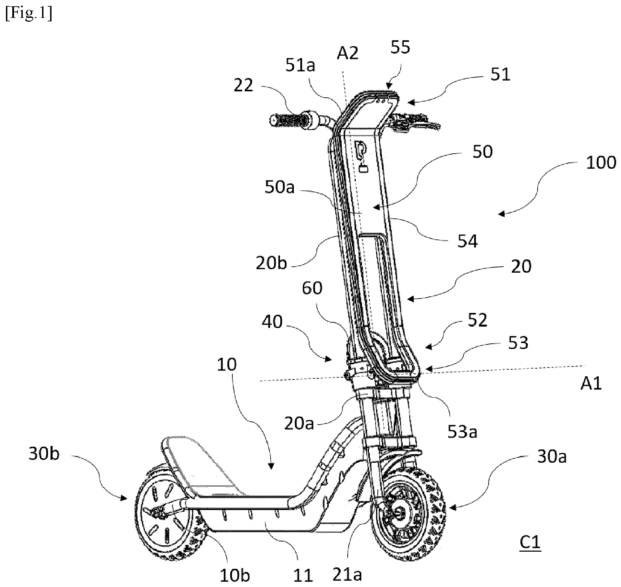

D'autres caractéristiques et avantages de la présente invention ressortiront de la description ci-dessous, en référence aux figures1 à 10 qui en illustrent un exemple de réalisation qui est dépourvu de tout caractère limitatif et sur lesquelles :
[Fig.1]
   La figure 1 représente une vue schématique en perspective d'une trottinette selon la présente invention dans une configuration d'utilisation ;
[Fig.2]

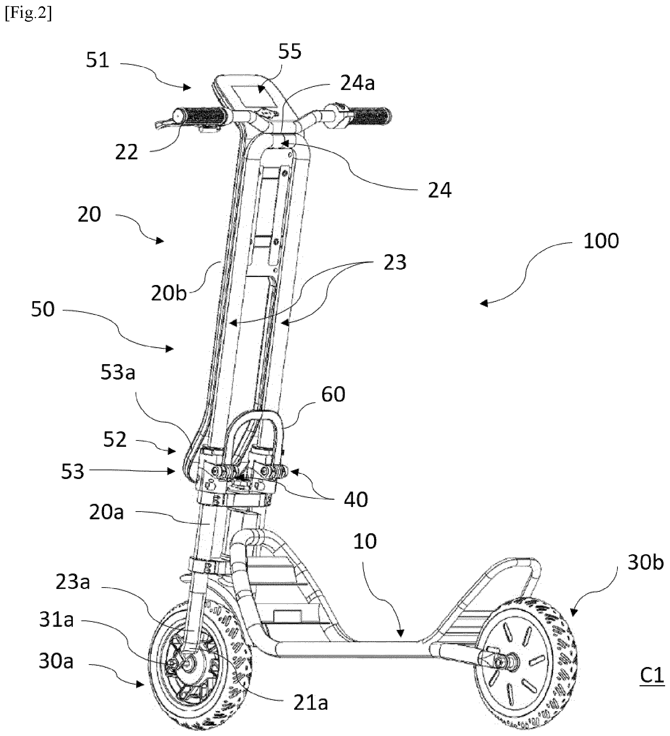

   La figure 2 représente une autre vue schématique en perspective d'une trottinette selon la présente invention dans une configuration d'utilisation ;
[Fig.3]

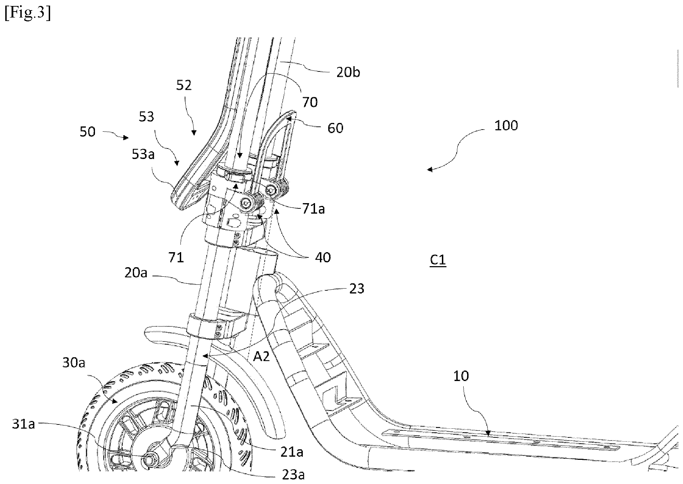

   La figure 3 représente un agrandissement de la figure 2 représentant le mécanisme de pliage d'une trottinette conforme aux figures 1 et 2 ;
[Fig.4]

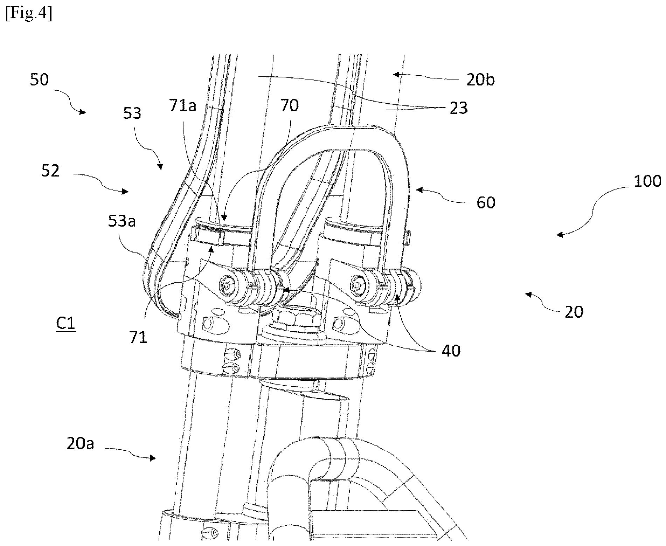

   La figure 4 représente une vue schématique en perspective du mécanisme de pliage d'une trottinette conforme aux figures 1 et 2 ;
[Fig.5]
   La figure 5 représente une vue schématique de face du mécanisme de pliage conforme à la figure 4 ;
[Fig.6] et [Fig.7]

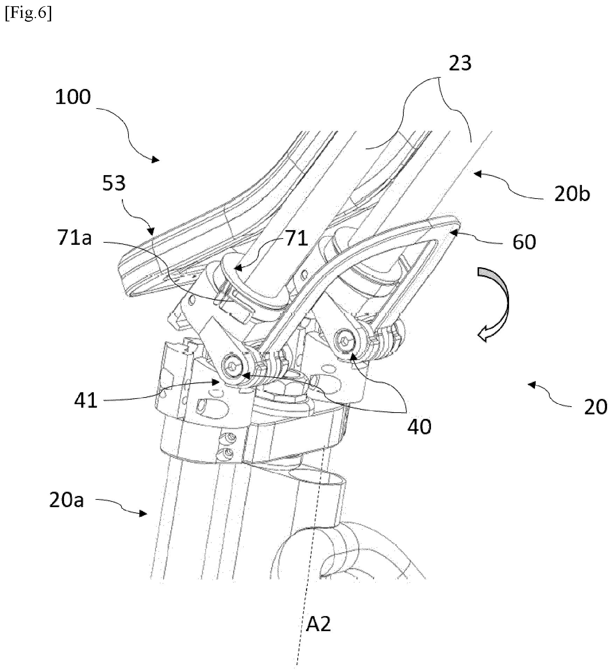

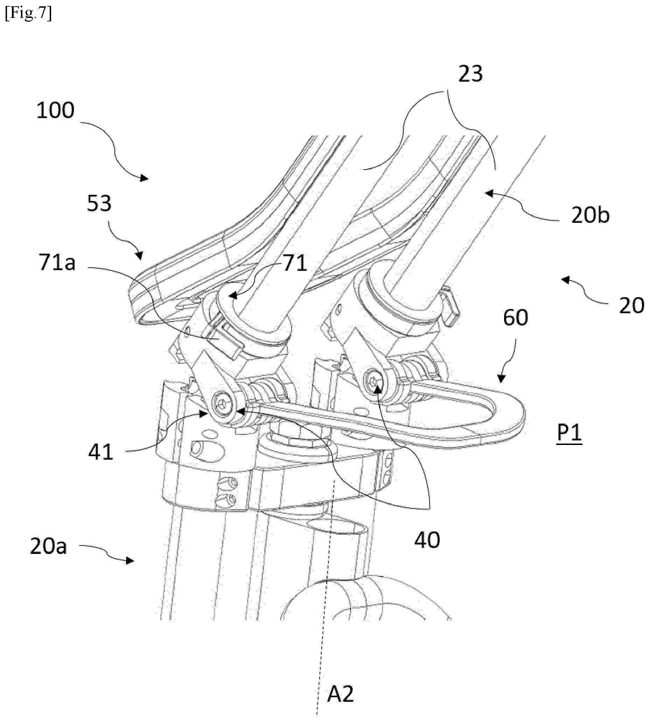

   Les figures 6 et 7 représentent chacune de façon schématique l'actionnement de la manette d'activation pour autoriser le pliage du bloc directionnel contre la plateforme d'une trottinette conforme aux figures 1 et 2 ;

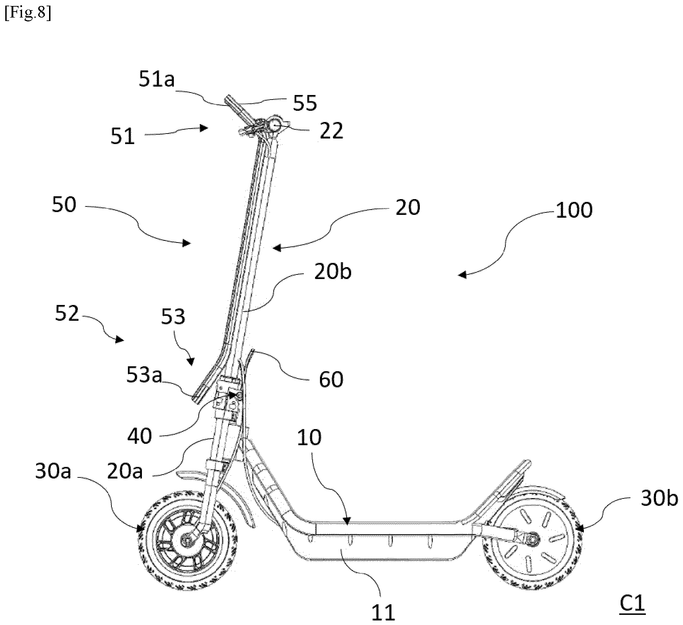

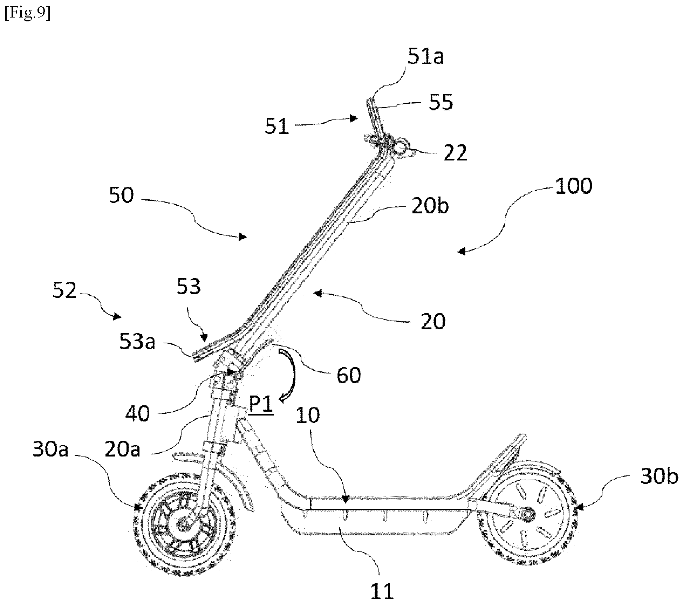

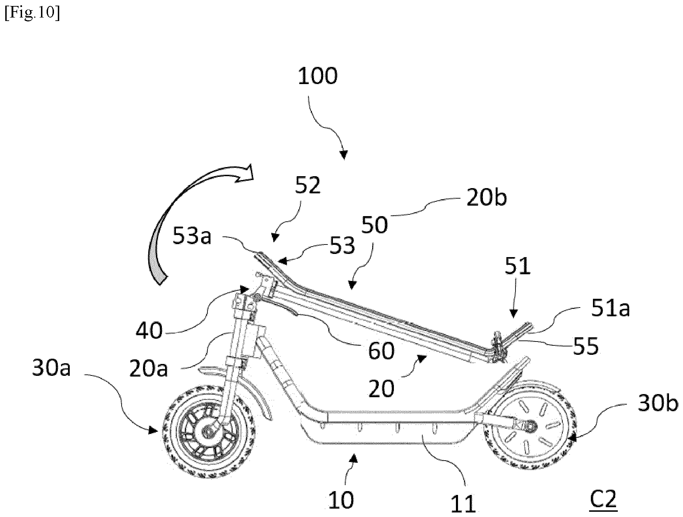

[Fig.8], [Fig.9] et [Fig. 10]
   Les figures 8, 9 et 10 représentent les différentes phases du pliage d'une trottinette conforme aux figures 1 et 2.

### Description détaillée

La présente invention va maintenant être décrite dans ce qui va suivre en référence conjointement aux figures 1 à 10 annexées à la description.

Pour mémoire, un des objectifs de la présente invention est de concevoir une trottinette pliable à encombrement réduit dont la conception doit permettre à celle-ci de pouvoir être transportée aisément.

Un des autres objectifs de la présente invention est de concevoir une structure de trottinette légère dont le passage de la configuration de transport à la configuration d'utilisation est simple et intuitif, et autorise un pliage/dépliage rapide et semi-automatique, notamment pour limiter les manipulations de l'utilisateur.

Encore un des autres objections de la présente invention est d'assurer la sécurité des utilisateurs lorsqu'ils font de la trottinette.

Ces différents objectifs sont simultanément atteints dans l'exemple de réalisation de l'invention décrit ci-dessous et illustré dans les figures en annexes.

Dans l'exemple décrit ici et comme illustré en notamment en figures 1 et 2, la présente invention concerne une trottinette 100 qui, classiquement, dispose d'une plateforme 10, ou « deck », destinée à recevoir un utilisateur en position debout. Ici, on prévoit de préférence une plateforme 10 suffisamment large pour recevoir l'utilisateur en position debout avec ses deux pieds joints face à la route. Une telle position de conduite est très confortable.

Dans cet exemple, la trottinette 100 comprend également un bloc directionnel 20 longiligne monté en liaison directement ou indirectement avec la plateforme 10 et deux roues (30a, 30b) dont une roue avant 30a fixée sur une extrémité proximale 21a du bloc 20 et une roue arrière 30b fixée sur une extrémité distale 10b de ladite plateforme 10.

Ici, le bloc directionnel 20 est articulé avec la plateforme 10 selon une liaison pivot autorisant un pivotement du bloc directionnel 20 par rapport à la plateforme 10 autour d'un deuxième axe de pivotement longitudinal (A2) du bloc 20.

L'actionnement du guidon 24 fixé sur l'extrémité distale 20b du bloc directionnel 20 permet ainsi le pivotement du bloc directionnel 20 par rapport à la plateforme 10 autour du deuxième axe de pivotement P2, ce qui permet d'orienter la roue avant 30a dans un sens de déplacement souhaité de la trottinette 100.

Dans cet exemple, la trottinette 100 est électrique ; elle comprend une batterie 11 rechargeable (de type par exemple lithium-ion) intégrée sous la plateforme 10. On comprend donc que cette batterie 11 est raccordée électriquement aux moyens d'entraînement des roues 30a et 30b (par exemple un moteur placé dans la roue avant 20a ou la roue arrière 30b).

La batterie 11 est également raccordée électriquement à des moyens d'affichage 55 par un câble d'alimentation et une connectique apte à se connecter aux moyens d'affichage 55.

Ici, ces moyens d'affichage 55 comprennent par exemple un écran tactile configuré pour afficher différentes informations telles que par exemple la vitesse de déplacement de la trottinette 100, le niveau de charge de la batterie 11 ainsi que des données et statistiques associées au(x) trajet(s). On peut également prévoir une connexion filaire ou non de cet écran avec un terminal de communication de l'utilisateur de la trottinette, par exemple pour afficher un itinéraire à effectuer ou les sites d'amarrage de la trottinette avec les emplacements disponibles.

Un des concepts sous-jacents à la présente invention est de proposer une solution de pliage simple avec une conception facilitant le déplacement de la trottinette lorsque celle-ci n'est pas utilisée, l'utilisation de la trottinette étant en effet dangereuse, voire interdite, sur certaines zones piétonnes (risque de collision élevé avec un piéton).

Dans l'exemple décrit ici et comme illustré en figure 4, il est donc prévu d'équiper le bloc directionnel 20 par des moyens de pliage 40 mettant en oeuvre une première liaison pivot agencée entre la portion distale 20b et la portion proximale 20a du bloc 20.

Ces moyens de pliage 40 peuvent prendre la forme d'un système de charnière par exemple. Dans cet exemple, l'activation des moyens de pliage 40 autorise un pivotement de la portion distale 20b du bloc 20 par rapport à la portion proximale 20a du bloc 20 autour d'un premier axe de pivotement A1 lequel est perpendiculaire à l'axe longitudinal A2 du bloc 20 et s'étend dans un plan transversal à la plateforme 10.

Ainsi, un tel pivotement entraîne le passage d'une première configuration C1 dite d'utilisation (figure 1 ou 2) vers une deuxième configuration C2 dite de transport (figure 10), et inversement.

En configuration d'utilisation C1, les moyens de pliage 40 sont donc désactivées : le bloc directionnel 20 et la plateforme 10 sont sensiblement en équerre l'un par rapport à l'autre.

En configuration de transport C2, les moyens de pliage 40 sont activés : la portion distale 20b du bloc 20 est rabattue contre la plateforme 10 afin de réduire l'encombrement de la trottinette 100.

Il est avantageusement prévu d'équiper la trottinette 100 d'un bouclier frontal 50 lequel est caractéristique de la présente invention. Un tel bouclier 50 qui est solidaire du bloc directionnel 20 présente une forme elliptique incurvée avec :
- un premier bord distal 51 de forme incurvée vers l'avant définissant une face externe 51a qui reçoit les moyens d'affichage 55 et qui est orientée en direction de l'utilisateur de la trottinette 100 en configuration d'utilisation C1 (figure 1) ; et
- un deuxième bord proximal 52 de forme incurvée vers l'avant présentant une portion d'arceau 53 (figure 3) définissant, lorsque la trottinette 100 est en configuration de transport C2 (figure 10), une poignée de préhension 53a à portée de main de l'utilisateur pour en faciliter la traction lors d'un déplacement pédestre.

La forme spécifique de ce bouclier 50 permet donc de :
- supporter les moyens d'affichage pour une position ergonomique de l'affichage par rapport au champ de vision de l'utilisateur en configuration d'utilisation C1 (figure 1) ; et de
- faciliter la prise en main aisée de la trottinette 100 lorsque celle-ci est en configuration de transport C2 (figure 10) par la présence d'une poignée de préhension 53a facilitant la préhension de la trottinette 100 pour une traction de celle-ci.

Ce bouclier 50 dont la forme est caractéristique de la présente invention est particulièrement apprécié pour cette double fonctionnalité.

Dans l'exemple décrit ici, le bouclier frontal 50 comprend en outre sur sa face frontale 50a un dispositif d'éclairage et de signalisation 54 se présentant sous la forme d'un bandeau lumineux de type bandeau led qui s'étend sur le pourtour périphérique du bouclier.

Outre l'aspect sécuritaire associé à l'intégration de ce dispositif d'éclairage et de signalisation 54, l'effet visuel associé à ce dispositif 54 est très identitaire et constitue la signature visuelle de la trottinette 100.

On comprend ici que ce dispositif d'éclairage et de signalisation 54 est raccordé électriquement à la batterie 11.

Dans l'exemple décrit ici, on prévoit également la commande de ce dispositif d'éclairage et de signalisation 54 via une interface de commande sur les moyens d'affichage 55.

Il est ainsi possible d'actionner un mode « phares de position », un mode « feux de croisement » ou encore un mode « pleins phares ». Il est aussi possible d'intégrer des clignotants pour indiquer un virage à droit ou à gauche. Ici, on comprend que l'ensemble de ces actions est actionnable via l'interface de commande.

Le pliage prévu pour la trottinette est lui-aussi caractéristique de la présente invention ; ce dernier doit être actionné de façon simple et intuitif et répondre à des normes de sécurité pour éviter un pliage accidentel lors d'une utilisation.

A cet effet, il est prévu dans l'exemple décrit ici et illustré en figure 2 que le bloc directionnel 20 présente une structure tubulaire avec un système de double-potence en forme de U ; ici, le U comprend deux branches 23 et une base 24, les extrémités 23a des deux branches 23 réceptionnant l'axe 31a de la roue avant 30a et la base 24 comprenant une empreinte 24a pour la réception d'un guidon 22.

On comprend ici que les moyens de pliage 40 sont configurés pour assurer le pliage respectif de chacune des branches 23 du U.

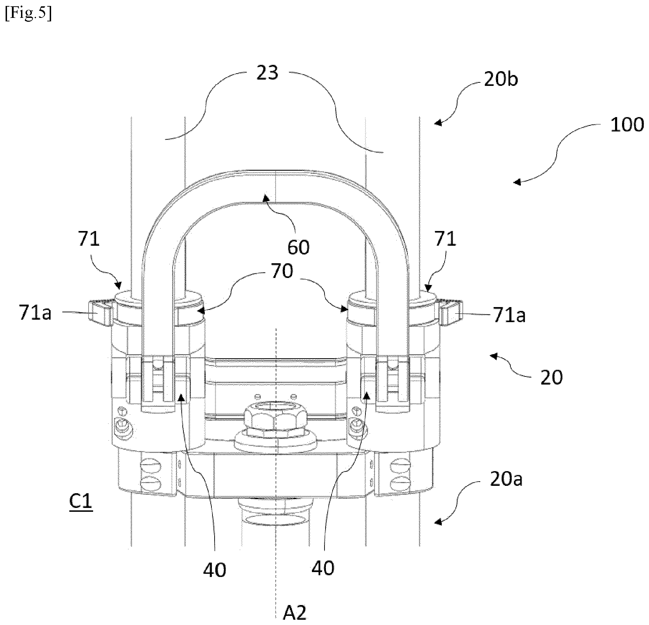

Il est ainsi prévu dans l'exemple décrit ici la présence d'une manette d'activation 60 illustrée notamment en figures 4 et 5 reliant les moyens de pliage 40 de chacune des branches 23 du U et dont l'actionnement (figures 6 et 7) dans une position de pliage P1 permet d'activer le pliage simultané des branches 23.

Plus spécifiquement, on prévoit ici que la manette d'activation 60 en position de pliage P1 actionne une came 41 qui déverrouille le pliage.

Pour répondre aux contraintes sécuritaires, il est en outre prévu des moyens de verrouillage/déverrouillage 70 pour empêcher un actionnement accidentel de la manette 60. Ainsi, pour chaque branche 23 du U, on prévoit une bague de sécurité 71 comprenant une encoche de blocage 71a. En tournant la bague de sécurité 71 sur elle-même autour de la branche 23, il est possible d'autoriser le passage d'une position verrouillée à une position déverrouillée, ou inversement, dans lesquelles :
- en position verrouillée, l'encoche 71a est engagée dans une portion de la manette d'activation 60 pour bloquer l'actionnement de celle-ci et maintenir en position la came 41 ; et
- en position déverrouillée, l'encoche 71a est désengagée de la manette d'activation 60 pour libérer l'actionnement de celle-ci et autoriser l'actionnement de la came 41.

Le système de pliage avec double verrouillage offre ainsi une double sécurité.

La trottinette 100 selon la présente invention, grâce à la présence de ce bouclier frontal 54 et son système de pliage actionnable par une manette 60, offre un design esthétique au service de la sécurité et de la performance.

Il devra être observé que cette description détaillée porte sur un exemple de réalisation particulier de la présente invention, mais qu'en aucun cas cette description ne revêt un quelconque caractère limitatif à l'objet de l'invention ; bien au contraire, elle a pour objectif d'ôter toute éventuelle imprécision ou toute mauvaise interprétation des revendications qui suivent.

Il devra également être observé que les signes de références mis entre parenthèses dans les revendications qui suivent ne présentent en aucun cas un caractère limitatif ; ces signes ont pour seul but d'améliorer l'intelligibilité et la compréhension des revendications qui suivent ainsi que la portée de la protection recherchée.

## Revendications

1. Trottinette (100) comportant :
- une plateforme (10) destinée à recevoir un utilisateur en position debout ;
- un bloc directionnel (20) longiligne monté en liaison directement ou indirectement avec ladite plateforme (10) ; et
- au moins deux roues (30a, 30b) dont une roue avant (30a) fixée sur une extrémité proximale (21a) dudit bloc directionnel (20) et une roue arrière (30b) fixée sur une extrémité distale (10b) de ladite plateforme (10) ;
dans laquelle ledit bloc directionnel (20) comprend des moyens de pliage (40) mettant en oeuvre une première liaison pivot, agencée entre une portion distale (20b) et une portion proximale (20a) dudit bloc (20), dont l'activation autorise un pivotement de la portion distale (20b) dudit bloc (20) par rapport à la portion proximale (20a) dudit bloc (20) autour d'un premier axe de pivotement (A1) perpendiculaire à l'axe longitudinal (A2) dudit bloc (20) et s'étendant dans un plan transversal à ladite plateforme (10), pour un passage d'une première configuration (C1) dite d'utilisation vers une deuxième configuration (C2) dite de transport dans lesquelles :
- en configuration d'utilisation (C1), les moyens de pliage (40) sont désactivées de manière à ce que le bloc directionnel (20) et ladite plateforme (10) sont en équerre l'un par rapport à l'autre ; et
- en configuration de transport (C2), les moyens de pliage (40) sont activés de manière à ce que la portion distale (20b) dudit bloc (20) pivote autour du premier axe de pivotement (A1) pour se rabattre en direction de ladite plateforme (10) afin de réduire l'encombrement de ladite trottinette (100),
dans lequel le bloc directionnel (20) présente un système de double-potence formant un U comprenant deux branches (23) dont les extrémités (23a) réceptionnent l'axe (31a) de la roue avant (30a),
ladite trottinette (100) étant **caractérisée en ce que** les moyens de pliage (40) sont configurés pour assurer le pliage respectif de chacune des branches (23) du U, et **en ce que** la trottinette (100) comprend en outre une manette d'activation (60) reliant les moyens de pliage (40) de chacune des branches (23) du U et étant configurée pour que l'actionnement de ladite manette (60) dans une position de pliage (P1) permet d'activer le pliage simultané desdites branches (23).

2. Trottinette (100) selon la revendication 1, **caractérisée** en que la manette d'activation (60) est configurée pour actionner une came (41) apte à déverrouiller le pliage respectif desdits moyens de pliage (40) lorsque ladite manette d'activation (60) atteint ladite position de pliage (P1).

3. Trottinette (100) selon la revendication 1 ou 2, **caractérisée** en que le bloc directionnel (20) présente une structure tubulaire.

4. Trottinette (100) selon l'une quelconque des revendications précédentes, **caractérisée en ce qu'**elle comporte un bouclier frontal (50), solidaire dudit bloc directionnel (20), présentant :
- un premier bord distal (51) de forme incurvée vers l'avant définissant une face externe (51a), apte à recevoir des moyens d'affichage (55), orientée en direction dudit utilisateur de la trottinette (100) en configuration d'utilisation (C1) ; et
- un deuxième bord proximal (52) de forme incurvée vers l'avant présentant une portion d'arceau (53) définissant, lorsque la trottinette (100) est en configuration de transport (C2), une poignée de préhension (53a) à portée de main dudit utilisateur pour en faciliter la traction lors d'un déplacement pédestre.

5. Trottinette (100) selon la revendication 4, ladite trottinette (100) étant de type électrique, laquelle comprend une batterie (11) intégrée à ladite plateforme (10).

6. Trottinette (100) selon la revendication 5, dans lequel la batterie (11) est raccordée électriquement aux moyens d'affichage (55) par un câble d'alimentation et une connectique apte à se connecter aux moyens d'affichage (55).

7. Trottinette (100) selon la revendication 5 ou 6, dans lequel le bouclier frontal (50) comprend en face frontale (50a) un dispositif d'éclairage et de signalisation (54) raccordé électriquement à ladite batterie (11), ledit dispositif d'éclairage et de signalisation (54) comprenant de préférence un bandeau leds.

8. Trottinette (100) selon la revendication 7, dans lequel le dispositif d'éclairage et de signalisation (54) est apte à être commandé électroniquement via une interface de commande des moyens d'affichage (55).

9. Trottinette (100) selon l'une quelconque des revendications précédentes, laquelle comprend des moyens de verrouillage/déverrouillage (70) configurés pour verrouiller/déverrouiller l'actionnement de la manette de pliage (60).

10. Trottinette (100) selon la revendication 9, dans laquelle les moyens de verrouillage/déverrouillage (70) comprennent pour chaque branche (23) du U une bague de sécurité (71) comprenant une encoche de blocage (71a), ladite bague de sécurité (71) étant apte à tourner sur elle-même autour de ladite branche (23) de manière à autoriser le passage d'une position verrouillée à une position déverrouillée, ou inversement, dans lesquelles :
- en position verrouillée, ladite encoche (71a) est engagée dans une portion de la manette d'activation (60) pour bloquer l'actionnement de celle-ci et maintenir en position la came (41) ; et
- en position déverrouillée, ladite encoche (71a) est désengagée de ladite manette d'activation (60) pour libérer l'actionnement de celle-ci et autoriser l'actionnement de la came (41).

11. Trottinette (100) selon l'une quelconque des revendications précédentes, dans laquelle la poignée de préhension (53a) s'étend dans le prolongement de la plateforme (10).

12. Trottinette (100) selon l'une quelconque des revendications précédentes, dans laquelle le bouclier frontal (50) présente une forme elliptique incurvée.

13. Trottinette (100) selon l'une quelconque des revendications précédentes, dans laquelle la base (24) du U comprend une empreinte (24a) pour la réception d'un guidon (22).

14. Trottinette (100) selon l'une quelconque des revendications précédentes, dans laquelle le bloc directionnel (20) est articulé directement ou indirectement avec ladite plateforme (10) selon une deuxième liaison pivot autorisant un pivotement du bloc directionnel (20) par rapport à ladite plateforme (10) autour d'un deuxième axe de pivotement longitudinal (A2) dudit bloc (20).

15. Trottinette (100) selon la revendication 14 rattachée à la revendication 13, dans lequel l'actionnement du guidon (22) entraîne le pivotement du bloc directionnel (20) par rapport à la plateforme (10) autour dudit deuxième axe de pivotement (P2) afin d'orienter la roue avant (30a) dans un sens de déplacement souhaité de ladite trottinette (100).
